# FASCICULE DE BREVET EUROPEEN

(11) **EP 1 785 324 B1**
(45) Date de publication et mention de la délivrance du brevet: **27.02.2008**
(21) Numéro de dépôt: 05292401.6
(22) Date de dépôt: 14.11.2005
(51) Int. Cl.: B60T 8/26, B60T 8/32, B60T 13/74, B60T 13/58

(54) **Procédé de controle d'un systeme de freinage hybride**
Steuerungsverfahren für ein Hybridbremssystem
Control method for a hybrid brake system

(43) Date de publication de la demande: 16.05.2007
(73) Titulaire: Delphi Technologies, Inc., Troy, MI 48007 (US)
(72) Inventeur: Lemaire, Jean-Christophe, 92300 Levallois-Perret (FR); Chaumette, Pascal, 94000 Creteil (FR); Loche, Jacques, 92600 Asnieres (FR)
(74) Mandataire: Laget, Jean-Loup

(56) Documents cités:
- EP-A- 1 352 799
- US-A- 5 390 992
- US-A- 5 615 933

## Description

La présente invention a pour objet un procédé de contrôle d'un système de freinage hybride.

Deux types de systèmes de freinage sont généralement utilisés, les systèmes de freinage complètement hydrauliques, dans lesquels les roues arrière du véhicule sont équipées de freins hydrauliques, le freinage des roues arrière étant alors assuré de manière mécanique, et les systèmes de freinage hybrides, dans lesquels les roues arrière du véhicule sont équipées de freins électriques commandés par une unité de commande.

Dans les systèmes de freinage hybrides, la force de freinage appliquée sur les roues arrière est calculée par l'unité de commande à partir de mesures provenant de capteurs, disposés, par exemple, dans un circuit hydraulique relié aux roues avant du véhicule, et il n'y a donc pas de lien direct entre la force de freinage appliquée sur les roues avant et celle appliquée sur les roues arrière. Il est donc particulièrement important dans ce cas que l'unité de commande soit apte à calculer une force de freinage adaptée même lors d'une défaillance d'une partie du système de freinage pour garantir la sécurité du conducteur et des passagers.

Des procédés de contrôle des systèmes de freinage hybride sont décrits dans les documents JP 2002067909 et EP1 352 799A.

La présente invention a pour but de proposer un nouveau système de freinage hybride qui permette un contrôle efficace du freinage des roues arrière en utilisant un nombre réduit de capteurs.

A cet effet, l'invention a pour objet un procédé de contrôle d'un système de freinage hybride d'un véhicule, ledit système de freinage comportant un maître-cylindre ayant une première et une deuxième chambres, un premier et un deuxième freins hydrauliques aptes à appliquer respectivement une force de freinage sur une première et une deuxième roues avant dudit véhicule, un premier circuit hydraulique apte à mettre en communication une desdites première et deuxième chambres avec ledit premier frein hydraulique, un deuxième circuit hydraulique apte à mettre en communication une desdites première et deuxième chambres avec ledit deuxième frein hydraulique, ledit système de freinage comportant un premier et un deuxième freins électriques aptes à appliquer respectivement une force de freinage sur une première et une deuxième roues arrière dudit véhicule, ladite première roue arrière étant diagonalement opposée à ladite première roue avant, ladite deuxième roue arrière étant diagonalement opposée à ladite deuxième roue avant, ledit système de freinage comportant un capteur de pression apte à mesurer une première pression de chambre au niveau d'au moins une desdites première et deuxième chambres du maître cylindre, un capteur de pression apte à mesurer une deuxième pression de chambre au niveau d'au moins une desdites première et deuxième chambres du maître cylindre, un capteur de pression apte à mesurer une première pression de roue au niveau du premier frein hydraulique et un capteur de pression apte à mesurer une deuxième pression de roue au niveau du deuxième frein hydraulique, caractérisé par les étapes consistant à :
a) effectuer une mesure desdites première pression de chambre, deuxième pression de chambre, première pression de roue et deuxième pression de roue,
b) évaluer plusieurs conditions de corrélation entre à chaque fois deux desdites pressions mesurées afin de déterminer un état dudit système de freinage, et
c) sélectionner une première et une deuxième pressions de commande de freinage arrière parmi lesdites pressions mesurées à l'étape a) en fonction des valeurs des conditions de corrélation évaluées à l'étape b), lesdites première et deuxième pressions de commande étant destinées à servir au calcul de la force de freinage devant être appliquée par lesdits premier et deuxième freins électriques respectivement.

Avantageusement, le procédé comprend une étape e) consistant à tester si un modulateur disposé dans lesdits premier et deuxième circuits hydrauliques est actif, lesdites première et deuxième pressions de commande de freinage arrière étant sélectionnées à l'étape c) en fonction du test de l'étape e).

De préférence, si ledit modulateur est actif, lesdites première et deuxième pressions de commande de freinage arrière sélectionnées à l'étape c) sont choisies parmi lesdites pressions de chambre, sinon lesdites première et deuxième pressions de commande sélectionnées à l'étape c) sont choisies parmi lesdites pressions de roue.

Selon un mode de réalisation de l'invention, à l'étape b), l'évaluation d'une condition de corrélation consiste à calculer la différence entre lesdites deux pressions mesurées et à comparer ladite différence avec une plage de tolérance prédéfinie.

Avantageusement, ladite plage de tolérance prédéfinie est fonction d' une vitesse d'application de l'effort de freinage.

Selon un mode de réalisation de l'invention, l'étape b) comporte les sous-étapes consistant à :
- évaluer une condition de corrélation entre ladite première pression de roue et ladite première pression de chambre,
- évaluer une condition de corrélation entre ladite première pression de chambre et l'une desdites deuxièmes pressions,
- et, si aucune des deux conditions de corrélation n'est vérifiée, déterminer un état dudit système de freinage comprenant une panne d'un capteur de première pression de chambre.

Avantageusement, dans ce mode de réalisation, ladite première pression de commande de freinage arrière sélectionnée à l'étape c) est la première pression de roue ou la deuxième pression de chambre.

Ainsi dans un mode de réalisation de l'invention, ladite première pression de commande de freinage arrière sélectionnée à l'étape c) est ladite deuxième pression de chambre si le modulateur est actif et ladite première pression de roue si ledit modulateur est inactif.

Selon un mode de réalisation de l'invention, l'étape b) comporte les sous-étapes consistant à :
- évaluer une condition de corrélation entre ladite première pression de roue et ladite première pression de chambre,
- évaluer une condition de corrélation entre ladite première pression de roue et l'une desdites deuxièmes pression,
- et, si aucune des deux conditions de corrélation n'est vérifiée, déterminer un état dudit système de freinage comprenant une panne d'un capteur de première pression de roue.

Avantageusement, dans ce mode de réalisation, ladite première pression de commande de freinage arrière sélectionnée à l'étape c) est la première pression de chambre ou la deuxième pression de roue.

Ainsi dans un mode de réalisation de l'invention, ladite première pression de commande de freinage arrière sélectionnée à l'étape c) est ladite deuxième pression de roue si le modulateur est inactif et la première pression de chambre si le modulateur est actif.

Selon un mode de réalisation de l'invention, ledit premier circuit hydraulique est apte à mettre en communication ladite deuxième chambre avec ledit premier frein hydraulique et que ledit deuxième circuit hydraulique est apte à mettre en communication ladite deuxième chambre avec ledit deuxième frein hydraulique, lesdites première et deuxième pressions de chambre étant mesurées par lesdits capteurs de pression au niveau de ladite première chambre du maître cylindre.

De préférence, dans ce cas, l'étape b) comporte les sous-étapes consistant à :
- évaluer une première condition de corrélation entre ladite première pression de chambre et ladite deuxième pression de chambre,
- évaluer une deuxième condition de corrélation entre ladite première pression de roue et ladite deuxième pression de roue,
- évaluer une troisième condition de corrélation entre l'une desdites pressions de chambre et l'une desdites pressions de roue,
- et, si la première condition est vérifiée, et que la deuxième condition est vérifiée, et que la troisième condition n'est pas vérifiée, déterminer un état du système dans lequel au moins un desdits circuits hydrauliques présente un risque de fuite.

Dans un autre mode de réalisation, dans lequel ledit premier circuit hydraulique est apte à mettre en communication ladite première chambre avec ledit premier frein hydraulique et que ledit deuxième circuit hydraulique est apte à mettre en communication ladite deuxième chambre avec ledit deuxième frein hydraulique lesdites première et deuxième pressions de chambre étant mesurées par lesdits capteurs de pression au niveau des première et deuxième chambres du maître cylindre respectivement.

De préférence, dans ce cas, l'étape b) comporte les sous-étapes consistant à :
- évaluer une première condition de corrélation entre ladite première pression de roue et ladite première pression de chambre,
- évaluer une deuxième condition de corrélation entre ladite première pression de roue et l'une desdites deuxièmes pression,
- évaluer une troisième condition de corrélation entre ladite première pression de chambre et l'une desdites deuxièmes pression,
- et, si la première condition est vérifiée, et que la deuxième condition n'est pas vérifiée, et que la troisième condition n'est pas vérifiée, déterminer un état du système dans lequel au moins un desdits circuits hydrauliques présente un risque de fuite.

Selon un mode de réalisation de l'invention, le procédé comporte une étape d) consistant à :
- sélectionner la plus haute première pression mesurée parmi lesdites premières pressions,
- sélectionner la plus haute deuxième pression mesurée parmi lesdites deuxièmes pressions, et
- comparer entre elles ladite plus haute première pression et ladite plus haute deuxième pression,
le résultat de la comparaison effectuée à l'étape d) étant utilisé pour détecter dans lequel desdits circuits hydrauliques se trouve le risque de fuite.

Avantageusement, si ladite plus haute première pression est strictement inférieure à ladite plus haute deuxième pression, l'état dudit système de freinage déterminé à l'étape b) comprend un risque de fuite dans ledit premier circuit hydraulique et si ladite plus haute première pression est strictement supérieure à ladite plus haute deuxième pression, l'état dudit système de freinage déterminé à l'étape b) comprend un risque de fuite dans ledit deuxième circuit hydraulique.

Selon un mode de réalisation de l'invention, l'étape b) comporte les sous-étapes consistant à :
- évaluer une condition de corrélation entre ladite première pression de chambre et ladite deuxième pression de chambre,
- évaluer une condition de corrélation entre ladite deuxième pression de chambre et ladite deuxième pression de roue,
- évaluer une condition de corrélation entre ladite première pression de chambre et ladite première pression de roue,
et, si les trois conditions de corrélation sont vérifiées, déterminer un état hydraulique normal du système de freinage.

Avantageusement, dans un état hydraulique normal du système de freinage, ladite première pression de commande de freinage arrière sélectionnée à l'étape c) est l'une desdites première pression et ladite deuxième pression de commande de freinage arrière sélectionnée à l'étape c) est l'une desdites deuxième pression.

De préférence, les étapes a) et b) sont effectuées de manière répétée dans le temps, lesdites conditions de corrélations évaluées à l'étape b) étant à chaque fois des conditions de corrélation entre deux pressions instantanées, et que, à l'étape c) lesdites pressions de commande de freinage arrière sont sélectionnées en fonction de valeurs statistiques moyennes desdites conditions de corrélation.

Selon un mode de réalisation de l'invention, on définit un compteur associé à chacune desdites conditions de corrélation, l'étape b) comportant les sous-étapes consistant à incrémenter ledit compteur à chaque fois que ladite condition de corrélation entre pression instantanées est vérifiée et décrémenter ledit compteur à chaque fois que ladite condition de corrélation entre pression instantanée n'est pas vérifiée, ladite valeur statistique moyenne d'une condition de corrélation étant obtenue en comparant ledit compteur à un seuil prédéterminé.

L'invention a également pour objet un système de freinage hybride d'un véhicule, ledit système de freinage comportant un maître-cylindre ayant une première et une deuxième chambres, un premier et un deuxième freins hydrauliques aptes à appliquer respectivement une force de freinage sur une première et une deuxième roues avant dudit véhicule, un premier circuit hydraulique apte à mettre en communication une desdites première et deuxième chambres avec ledit premier frein hydraulique, un deuxième circuit hydraulique apte à mettre en communication une desdites première et deuxième chambres avec ledit deuxième frein hydraulique, ledit système de freinage comportant un premier et un deuxième freins électriques aptes à appliquer respectivement une force de freinage sur une première et une deuxième roues arrière dudit véhicule, ladite première roue arrière étant diagonalement opposée à ladite première roue avant, ladite deuxième roue arrière étant diagonalement opposée à ladite deuxième roue avant, ledit système de freinage comportant un capteur de pression apte à mesurer une première pression de chambre au niveau d'au moins une desdites première et deuxième chambres du maître cylindre, un capteur de pression apte à mesurer une deuxième pression de chambre au niveau d'au moins une desdites première et deuxième chambres du maître cylindre, un capteur de pression apte à mesurer une première pression de roue au niveau du premier frein hydraulique et un capteur de pression apte à mesurer une deuxième pression de roue au niveau du deuxième frein hydraulique, caractérisé en ce que ledit système de freinage comporte des moyens logique de corrélation pour évaluer plusieurs conditions de corrélation entre à chaque fois deux desdites pressions mesurées afin de déterminer un état dudit système de freinage, et des moyens logiques de sélection pour sélectionner une première et une deuxième pressions de commande de freinage arrière parmi lesdites pressions mesurées en fonction des valeurs des conditions de corrélation évaluées, et des moyens de commande de freinage aptes à commander lesdits premier et deuxième freins électriques respectivement en fonction desdites première et deuxième pressions de commande sélectionnées.

L'invention sera mieux comprise, et d'autre buts, détails, caractéristiques et avantages de celle-ci apparaîtront plus clairement au cours de la description explicative détaillée qui va suivre, de plusieurs modes de réalisation de l'invention donnés à titre d'exemples purement illustratifs et non limitatifs, en référence aux dessins schématiques annexés.

Sur ces dessins :
- la figure 1 est une vue schématique simplifiée d'un véhicule comportant un système de freinage hybride selon un premier mode de réalisation de l'invention ;
- la figure 2 est un schéma fonctionnel du procédé de contrôle du système de freinage de la figure 1 ; et
- la figure 3 est une vue schématique simplifiée d'un système de freinage hybride selon un deuxième mode de réalisation de l'invention.

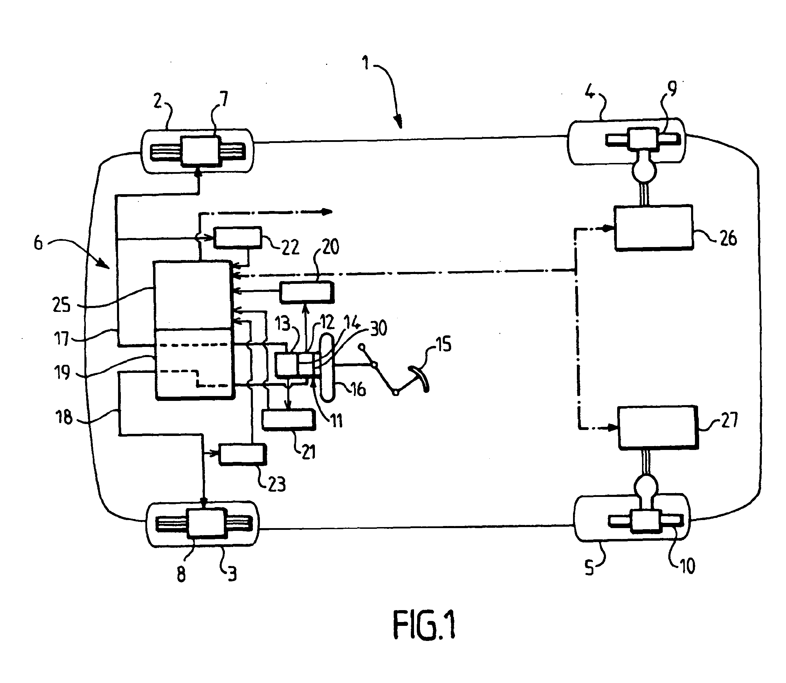

En se référant à la figure 1, on voit une vue schématique d'un véhicule 1. Le véhicule 1 comporte une roue avant droite 2, une roue avant gauche 3, une roue arrière droite 4 et une roue arrière gauche 5.

Le véhicule 1 est équipé d'un système de freinage hybride 6, c'est-à-dire un système de freinage dans lequel les roues avant 2, 3 sont reliées chacune à un frein hydraulique 7, 8 respectivement et les roues arrière 4, 5 sont reliées chacune à un frein électrique 9, 10 respectivement.

Le système de freinage 6 comprend un maître-cylindre tandem 11. Le maître-cylindre 11 comporte une chambre arrière 12 et une chambre avant 13, séparées l'une de l'autre par un piston secondaire 14. La chambre arrière 12 est fermée par un piston primaire 30 relié à une pédale de frein 15 par le biais d'un amplificateur de force à dépression ou servofrein 16.

Le système de freinage 6 comporte deux circuits hydrauliques 17, 18. Un circuit hydraulique droit 17 relie la chambre avant 13 au frein hydraulique droit 7 de la roue avant droite 2 via un modulateur de pression 19. Un circuit hydraulique gauche 18 relie la chambre arrière 12 au frein hydraulique gauche 8 de la roue avant gauche 3 via le modulateur 19.

Un capteur de chambre gauche 20 permet d'effectuer des mesures de la pression P_{LM} à l'intérieur de la chambre arrière 12. Un capteur de chambre 21 permet d'effectuer des mesures de la pression P_{RM} à l'intérieur de la chambre avant 13. Par convention, dans la suite de la description, on appellera la chambre avant 13 « chambre droite » et la chambre arrière 12 « chambre gauche » par référence au frein avant respectif auxquelles elles sont reliées. Bien sûr, un branchement inverse des freins avant aux chambres du maître-cylindre est également possible.

Un capteur de roue droite 22 permet d'effectuer des mesures de la pression P_{RW} dans le frein hydraulique droit 7. Un capteur de roue gauche 23 permet d'effectuer des mesures de la pression P_{LW} dans le frein hydraulique gauche 8. Les capteurs de pression 20, 21, 22 et 23 transmettent les mesures de pression P_{LM}, P_{RM}, P_{LW} et P_{RW} effectuées à une unité de commande 25 du véhicule 1. L'unité de commande 25 est par exemple une unité centrale de commande de freinage qui réalise des fonctions évoluées telles que le contrôle antiblocage ABS, le contrôle de stabilité ESP₁, etc. en pilotant le modulateur de pression 19. Le modulateur de pression 19 est un groupe hydraulique connu en soi comportant notamment une pompe, un accumulateur de pression et diverses électrovannes permettant de générer et de modifier la pression dans les freins hydrauliques 7 et 8 indépendamment de l'actionnement de la pédale 15.

L'unité de commande 25 est reliée à deux contrôleurs 26 et 27 par le biais d'un réseau de communication du véhicule 1. Le contrôleur 26 (respectivement le contrôleur 27) est relié au frein électrique droit 9 (respectivement frein électrique gauche 10) de la roue arrière droite 4 (respectivement de la roue arrière gauche 5) et permet de contrôler la force de freinage appliquée par le frein électrique droit 9 (respectivement gauche 10) sur la roue arrière droite 4 (respectivement gauche 5).

On va maintenant décrire le fonctionnement du système de freinage lorsque le système de freinage est dans un état normal, c'est-à-dire lorsque tous les capteurs de pression 20, 21, 22 et 23 fonctionnent correctement, de même que les circuits hydrauliques 17 et 18. Lorsque le conducteur appui sur la pédale de frein 15, la pression P_{LM} à l'intérieur de la chambre gauche 12 et la pression P_{RM} dans la chambre droite 13 du maître cylindre 11 sont modifiées de manière croissante par déplacement des pistons 30 et 14. La pression est ainsi modifiée dans les circuits hydrauliques droit 17 et gauche 18, de manière à créer une pression de commande de freinage avant dans les freins hydrauliques droit 7 et gauche 8.

Simultanément, l'unité de commande 25 calcule la force de freinage F_{R} et F_{L} qui doit être appliquée sur chaque frein électrique 9, 10 comme fonction f des mesures fournies par les capteurs de pression 20, 21, 22 et 23, comme indiqué à la deuxième ligne du tableau 1 annexé.

Lorsque le modulateur 19 est inactif, les mesures utilisées sont celles provenant des capteurs de roues 22 et 23. Lorsque le modulateur 19 est actif, il peut modifier les valeurs des pressions P_{RW} et P_{LW} dans les freins hydrauliques 7 et 8. Dans ce cas, les mesures utilisées sont celles provenant des capteurs de chambres 20 et 21. Dans tous les cas, en fonctionnement normal, les mesures provenant des capteurs gauches 21 et 23 sont utilisées pour déterminer la force de freinage qui doit être appliquée sur la roue arrière droite 4 et les mesures provenant des capteurs droits 20 et 22 sont utilisées pour déterminer la force de freinage qui doit être appliquée sur la roue arrière gauche 5. Un tel freinage croisé permet d'assurer une bonne stabilité du véhicule 1 pendant le freinage.

La fonction de freinage arrière f est par exemple une fonction linéaire de la pression mesurée.

En variante, pour tenir compte de la dynamique du véhicule, par exemple du fait que le poids se reporte sur l'avant lors du freinage, une fonction de freinage arrière plus évoluée peut être utilisée. Par exemple, la fonction de freinage arrière est déterminée de manière algorithmique au moyen d'une table de données.

L'unité de commande 25 est programmée pour être capable de diagnostiquer certaines défaillances du système de freinage ou de ses composants et pour adapter le mode de commande de freinage des roues arrière en fonction des défaillances diagnostiquées.

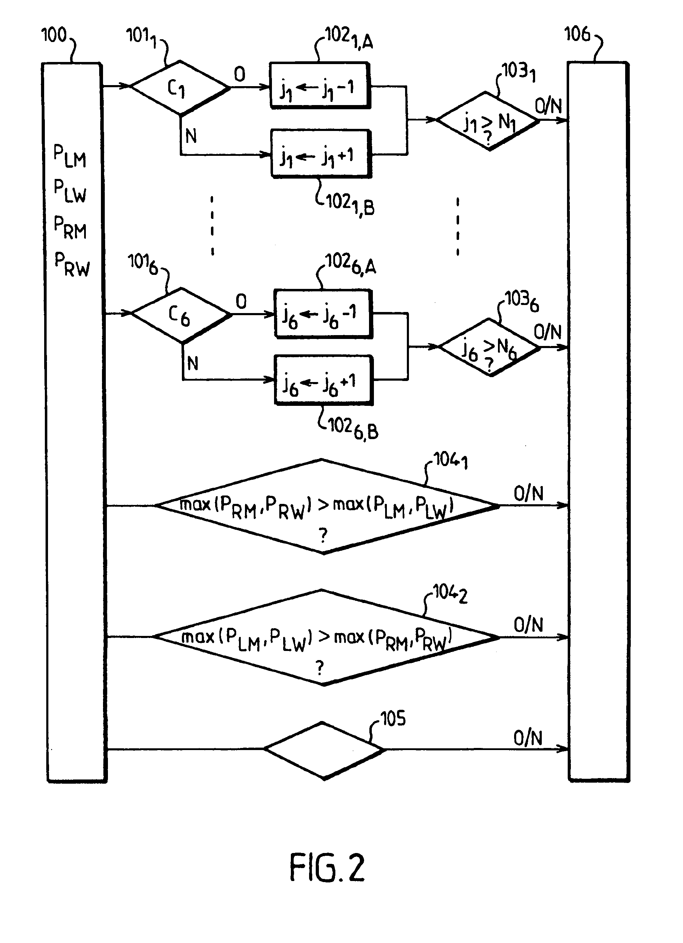

En se référant à la figure 2 et au tableau 1, on va maintenant décrire le fonctionnement du procédé de diagnostic et de commande selon un mode de réalisation de l'invention.

A l'étape 100, l'unité de commande 25 reçoit des mesures des pressions P_{LM}, P_{RM}, P_{RW} et P_{LW} provenant des quatre capteurs 20, 21, 22 et 23. Cette étape est par exemple réalisée périodiquement, avec une période de l'ordre de la milliseconde.

Aux étapes 101ᵢ, six conditions de corrélation cᵢ sont testées, i étant un entier compris entre 1 et 6. Une condition de corrélation cᵢ consiste à comparer la différence de deux des valeurs de pressions P_{RM}, P_{LM}, P_{RW} et P_{LW} reçues par l'unité de commande 25 à l'étape 100 avec un seuil si prédéterminé. La condition de corrélation cᵢ est vérifiée si la différence des deux pressions est inférieure au seuil sᵢ. Le seuil sᵢ tient compte des erreurs de mesure et du bruit. Le seuil sᵢ dépend également de la vitesse d'application de l'effort de freinage, de manière que le seuil sᵢ est d'autant plus élevé que la vitesse d'application est élevée. La vitesse d'application de l'effort de freinage est mesurée à partir du taux de croissance, c'est-à-dire à partir de la dérivée, de la pression dans la roue et/ou la chambre du maître-cylindre, le taux de croissance maximum au cours d'un freinage étant par exemple utilisé comme mesure de cette vitesse d'application. En effet, plus la vitesse d'application de l'effort de freinage augmente et plus des différences de pressions peuvent apparaître notamment du fait de l'existence de régimes transitoires. Chaque seuil sᵢ est ainsi fixé de manière que l'unité de commande 25 puisse détecter toutes les pannes tout en évitant la détection d'une panne lorsque celle-ci n'est pas présente. Le début de la première ligne du tableau 1 indique les deux pressions dont la corrélation est évaluée.

La condition de corrélation c₁ consiste à comparer la pression de chambre gauche P_{LM} avec la pression du frein hydraulique gauche P_{LW}, la condition de corrélation c₁ étant vérifiée lorsque P_{LM}-P_{LW}<S₁.

La condition de corrélation c₂ consiste à comparer la pression de chambre gauche P_{LM} avec la pression du frein hydraulique droit P_{RW}, la condition de corrélation c₂ étant vérifiée lorsque P_{LM}-P_{RW}<S₂.

La condition de corrélation c₃ consiste à comparer la pression du frein hydraulique gauche P_{LW} avec la pression du frein hydraulique droit P_{RW}, la condition de corrélation c₃ étant vérifiée lorsque P_{LW}-P_{RW}<S₃.

La condition de corrélation c₄ consiste à comparer la pression de chambre droite P_{RM} avec la pression de frein hydraulique gauche P_{LM}, la condition de corrélation c₄ étant vérifiée lorsque P_{RM}-P_{LM}<s₄.

La condition de corrélation c₅ consiste à comparer la pression de chambre droite P_{RM} avec la pression de frein hydraulique gauche P_{LW}, la condition de corrélation c₅ étant vérifiée lorsque P_{RM}-P_{LW}<s₅.

La condition de corrélation c₆ consiste à comparer la pression de chambre droite P_{RM} avec la pression de frein hydraulique droit P_{RW}, la condition de corrélation c₆ étant vérifiée lorsque P_{RM}-P_{RW}<s₆.

Ainsi, les valeurs des pressions P_{RM}, P_{LM}, P_{RW} et P_{LW} reçues des quatre capteurs 21, 20, 22 et 23 sont comparées deux à deux. Les conditions de corrélation c₁, c₂, c₃, c₄, c₅ et c₆ sont par exemple testées simultanément.

Lorsque la condition de corrélation cᵢ, par exemple la condition de corrélation c₁, est vérifiée, on passe à l'étape 102_{i,A}, ici l'étape 102_{1,A}. A l'étape 102_{i,A}, un compteur de condition de corrélation jᵢ, ici le compteur j₁, est décrémenté. Les compteurs jᵢ sont par exemple initialisés à 10, c'est-à-dire j₁₀=j₂₀=j₃₀=j₄₀=j₅₀=j₆₀=10. Les compteurs jᵢ ont une valeur minimale prédéterminée, par exemple égale à 0. Lorsqu'un compteur jᵢ est à sa valeur minimale, il n'est pas décrémenté.

Lorsque la condition de corrélation n'est pas vérifiée, par exemple la condition de corrélation c₃, on passe à l'étape 102_{i,B}, ici 102_{3,B}. A l'étape 102_{i,B}, le compteur de condition de corrélation jᵢ, ici le compteur j₃, est incrémenté.

A l'étape 103ᵢ, une condition de comparaison est testée, c'est-à-dire que la valeur du compteur jᵢ est comparée à un seuil prédéterminé Nᵢ. Lorsque jᵢ > Nᵢ, une variable logique est basculée dans un état « N » traduisant le fait que la condition de corrélation cᵢ est considérée statistiquement non vérifiée. Tant que jᵢ ≤ Ni, cette variable logique est dans un état « O » traduisant le fait que la condition de corrélation cᵢ est considérée statistiquement vérifiée. Les compteurs jᵢ et les seuils Nᵢ sont un moyen de déterminer une moyenne statistique de la condition de corrélation cᵢ, s'étendant sur une durée et un nombre de mesures suffisants, afin de rendre le système robuste aux artéfacts de mesure et d'éviter les fausses détections. On relèvera que d'autres méthodes statistiques peuvent être employées pour arriver à ce résultat, à savoir déterminer si les deux pressions comparées présentent une corrélation suffisante traduisant un fonctionnement normal du système, ou non.

A l'étape 104₁, qui est par exemple effectuée en parallèle des étapes 101ᵢ à 103ᵢ, la pression maximale P_{Rmax} parmi les pressions de droite P_{RM} et P_{RW} est déterminée, la pression maximale P_{Lmax} parmi les pressions de gauche P_{LM} et P_{LW} est déterminée et une condition de supériorité est testée, la condition de supériorité étant vérifiée si la pression maximale parmi les pressions de droite P_{Rmax} est supérieure à la pression maximale parmi les pressions de gauche P_{Lmax}, c'est-à-dire si P_{Rmax}=max(P_{RM},P_{RW})>P_{Lmax}=max(P_{LM},P_{LW}).

A l'étape 104₂, une condition de supériorité de la pression maximale parmi les pressions de gauche P_{LM} et P_{LW} par rapport à la pression maximale parmi les pressions de droite P_{RM} et P_{RW} est testée, la condition étant vérifiée si la pression maximale parmi les pressions de gauche P_{Lmax} est supérieure à la pression maximale parmi les pressions de droite P_{Rmax}, c'est-à-dire si P_{Lmax}=max(P_{LM},P_{LM})>P_{Rmax}= max(P_{RM},P_{RW}). En pratique, pour assurer une bonne fiabilité du diagnostic, l'écart entre pressions maximales est comparé à un seuil positif suffisamment élevé pour éviter les artéfacts de mesure et les fausses détections.

A l'étape 105, qui est par exemple effectuée en parallèle des étapes 104, et 104₂, une condition de modulateur actif est testée, la condition étant vérifiée si le modulateur 19 est actif.

Lorsque les étapes 103i, 104₁, 104₂ et 105 ont été effectuées, le procédé passe à l'étape 106. A l'étape 106, l'unité de commande 25 analyse les résultats des différentes conditions testées aux étapes 103ᵢ, 104₁, 104₂ et 105. Ces huit conditions sont résumées dans les huit premières colonnes du tableau 1. A partir de ces résultats, l'unité de commande 25 détermine un état du système de freinage 6 qui est indiqué dans la neuvième colonne du tableau 1. Lorsque les conditions de comparaison testées aux étapes 103ᵢ respectivement sont vérifiées et que les conditions de supériorité testées aux étapes 104₁ et 104₂ ne sont pas vérifiées, l'unité de commande 25 détermine que les capteurs 20, 21, 22 et 23 sont en bon état de marche et qu'il n'y a pas de fuite dans les circuits hydrauliques 17 et 18, ce qui correspond à la deuxième ligne du tableau 1.

Les étapes 100 à 106 sont effectuées de manière répétée dans le temps de manière à pouvoir diagnostiquer en temps réel l'apparition d'une défaillance dans le système et d'adapter immédiatement le mode de commande du freinage en conséquence.

Les lignes du tableau 1 allant de la troisième à la dernière illustrent différents cas de défaillance détectables par ce procédé. Les huit premières colonnes indiquent à chaque fois l'état vérifié « O » ou non vérifié « N » des conditions logiques testées aux étapes 103 à 105. La neuvième colonne indique la défaillance déterminée dans ce cas. La colonne « Mode de commande de freinage » indique à chaque fois laquelle des mesures de pression est prise en compte pour calculer les forces de freinage arrière F_{R} et F_{L}, selon l'état du modulateur de pression 19. La dernière colonne résume les caractéristiques du mode de commande de freinage sélectionné dans chaque cas de défaillance.

Par exemple, sur la troisième ligne du tableau 1, les conditions 103₄, 103₅ et 103₆ n'étant pas vérifiées, l'unité de commande 25 détermine un état du système comprenant une défaillance du capteur de pression de chambre droite 21, tel que cela est visible à la colonne « état du système ».

Dans ce cas, tel que cela est visible dans la colonne « effet » du tableau 1, à la troisième ligne, les mesures provenant du capteur de pression de chambre droite 21 sont ignorées. Lorsque le modulateur 19 est actif, les pressions de chambre P_{RM} et P_{LM} devraient normalement être utilisées. La pression de chambre droite P_{RM} étant erronée du fait de la défaillance du capteur 21, la pression de chambre gauche P_{LM} est utilisée à sa place pour le calcul de la force de freinage gauche F_{L}, tel que cela est visible dans la colonne « calcul de la force de freinage » du tableau 1.

De manière similaire, des défaillances des trois autres capteurs 20, 22 et 23 peuvent être détectées (lignes 4, 7 et 8 du tableau) et le mode de commande adapté en conséquence.

En se référant aux lignes 5 et 6 du tableau 1, on voit que les conditions testées ne diffèrent que par les résultats des conditions testées aux étapes 104₁ et 104₂. Les étapes 104₁ et 104₂ permettent de déterminer quel circuit hydraulique 17 ou 18 présente un risque de fuite lorsque les conditions des étapes 103₂, 103₃, 103₄ et 103₅ ne sont pas vérifiées.

Deux types de fuites peuvent se produire. Une fuite dite binaire est par exemple due à un joint mal fixé. Dans ce cas, la fuite est instantanée, c'est-à-dire que le liquide de frein se vide très rapidement, et le freinage du conducteur n'a plus d'effet sur le frein hydraulique correspondant au circuit hydraulique dans lequel la fuite est présente.

Une fuite peut également être due à un joint craquelé. Dans ce cas le liquide de frein se perd goutte par goutte et le freinage du conducteur continue d'agir sur le frein hydraulique correspondant au circuit hydraulique dans lequel une fuite est présente tant qu'il reste du fluide.

Dans les deux cas, lorsqu'un risque de fuite est détecté, les forces de freinage F_{R} et F_{L} sont calculées de manière similaire au cas du fonctionnement normal. De cette manière, l'équilibre du véhicule est conservé, car le freinage sur une roue arrière reste lié au freinage sur la roue avant disposée en diagonale.

Le tableau montre que, dans le cas de la ligne 5, le procédé ne permet pas de distinguer une fuite dans le circuit hydraulique gauche 18 d'un frottement du piston. Cependant, ceci n'est pas critique, car un même mode de commande permet de garantir la performance de freinage minimale et la stabilité du véhicule lorsque l'une de ces deux défaillances est détectée.On notera que, en théorie, deux tests suffisent pour détecter une panne d'un capteur 20, 21, 22, 23 et trois tests suffisent pour détecter un risque de fuite. Par rapport à ces tests minimaux, l'exemple de réalisation ici décrit comporte des tests de corrélations redondants. Par exemple, lorsque la condition de corrélation entre la pression de roue droite P_{RW} et la pression de chambre droite P_{RM} n'est pas vérifiée et que la condition de corrélation entre la pression de chambre droite P_{RM} et l'une des pressions gauche P_{LM} et P_{LW} n'est pas vérifiée, la condition de corrélation entre la pression de chambre droite P_{RM} et l'autre des pressions gauche P_{LM} et P_{LW} est nécessairement non vérifiée.

La redondance des conditions testées permet notamment de détecter un éventuel problème de traitement. En effet, lorsque des incohérences apparaissent dans les résultats des conditions, l'unité de commande 25 détecte un problème de traitement. Dans ce cas les forces de freinage F_{R} et F_{L} sont calculées de manière similaire au fonctionnement normal.

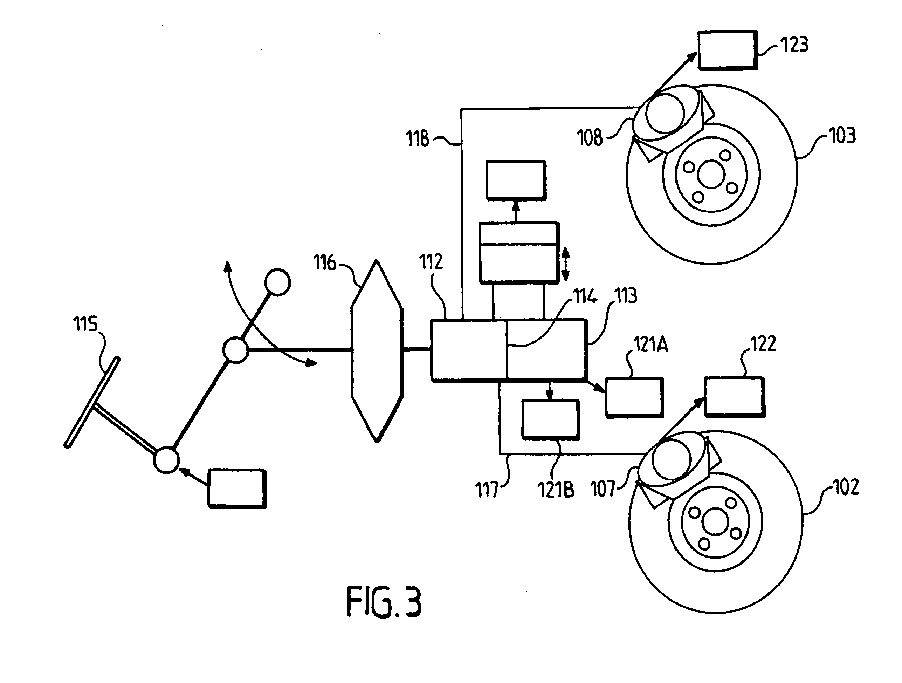

En se référant à la figure 3 et au tableau 2, on va maintenant décrire un deuxième mode de réalisation. Les éléments du système de freinage identiques au premier mode de réalisation sont désignés par le même chiffre de référence augmenté de 100 et ne sont pas décrits à nouveau. Ici, le circuit hydraulique droit 117 relie la chambre arrière 112 au frein hydraulique droit 107 et le circuit hydraulique gauche 118 relie la chambre arrière 112 au frein hydraulique gauche 108. En d'autres termes, les deux circuits hydrauliques 117, 118 sont reliés à la chambre arrière 112.

Deux capteurs de chambre 121A et 121B permettent d'effectuer des mesures de la pression P_{RM1} et P_{RM2} respectivement à l'intérieur de la chambre avant 113.

Les étapes du procédé de diagnostic et de commande selon le deuxième mode de réalisation de l'invention sont similaires aux étapes décrites pour le premier mode de réalisation, les mesures de pression de chambre droite P_{RM} et gauche P_{LM} étant ici remplacées par des mesures de pression de chambre avant P_{RM1} et P_{RM2} effectuées par deux capteurs 121A et 121B disposés dans la chambre avant 113. Les lignes du tableau 2 illustrent les différents cas de défaillances détectables par le procédé et les modes de freinage qui sont sélectionnés dans chaque cas.

Dans ce deuxième mode de réalisation, en cas de fuite dans l'un des deux circuits, la pression s'équilibre dans les deux circuits hydrauliques 117, 118 car ils sont connectés à la même chambre 112 du maître cylindre. Lorsqu'une fuite est détectée, la force de freinage qui doit être appliquée sur chaque frein électrique est calculée en fonction de la pression P_{RM1} ou P_{RM2} mesurée dans la chambre avant 113. On notera que, lorsque les capteurs 121A et 121B fonctionnent correctement, P_{RM1}=P_{RM2}.

L'utilisation de deux capteurs 121A, 121B redondants pour mesurer les pressions P_{RM1} et PR_{M2} à l'intérieur de la chambre avant 113 permet de différencier une panne d'un capteur 121A ou 121B d'un problème de type hydraulique.

Lorsque le modulateur de pression (non représenté sur la figure 3) est actif, la pression P_{RM1} ou P_{RM2} fournie par l'un des capteurs 121A et 121B présents dans le maître-cylindre, par exemple le capteur 121A, est de préférence utilisée pour calculer la force de freinage qui doit être appliquée sur chaque frein électrique. Le freinage croisé est conservé lorsque les pressions utilisées sont les pressions de roues P_{LW}, P_{RW}, c'est-à-dire lorsque le modulateur est inactif. Toutefois, dès qu'une défaillance d'un capteur est détectée, on n'utilise pas la mesure fournie par ce capteur dans le mode de commande correspondant.Dans le deuxième mode de réalisation, on peut permuter le rôle des deux chambres du maître-cylindre, à savoir brancher les deux freins avant à la chambre 113 et placer les capteurs 121A et 121B dans la chambre 112.

Bien que l'invention ait été décrite en relation avec plusieurs modes de réalisation particulier, il est bien évident qu'elle n'y est nullement limitée et qu'elle comprend tous les équivalents techniques des moyens décrits ainsi que leurs combinaisons si celles-ci entrent dans le cadre de l'invention comme décrit par les revendications.

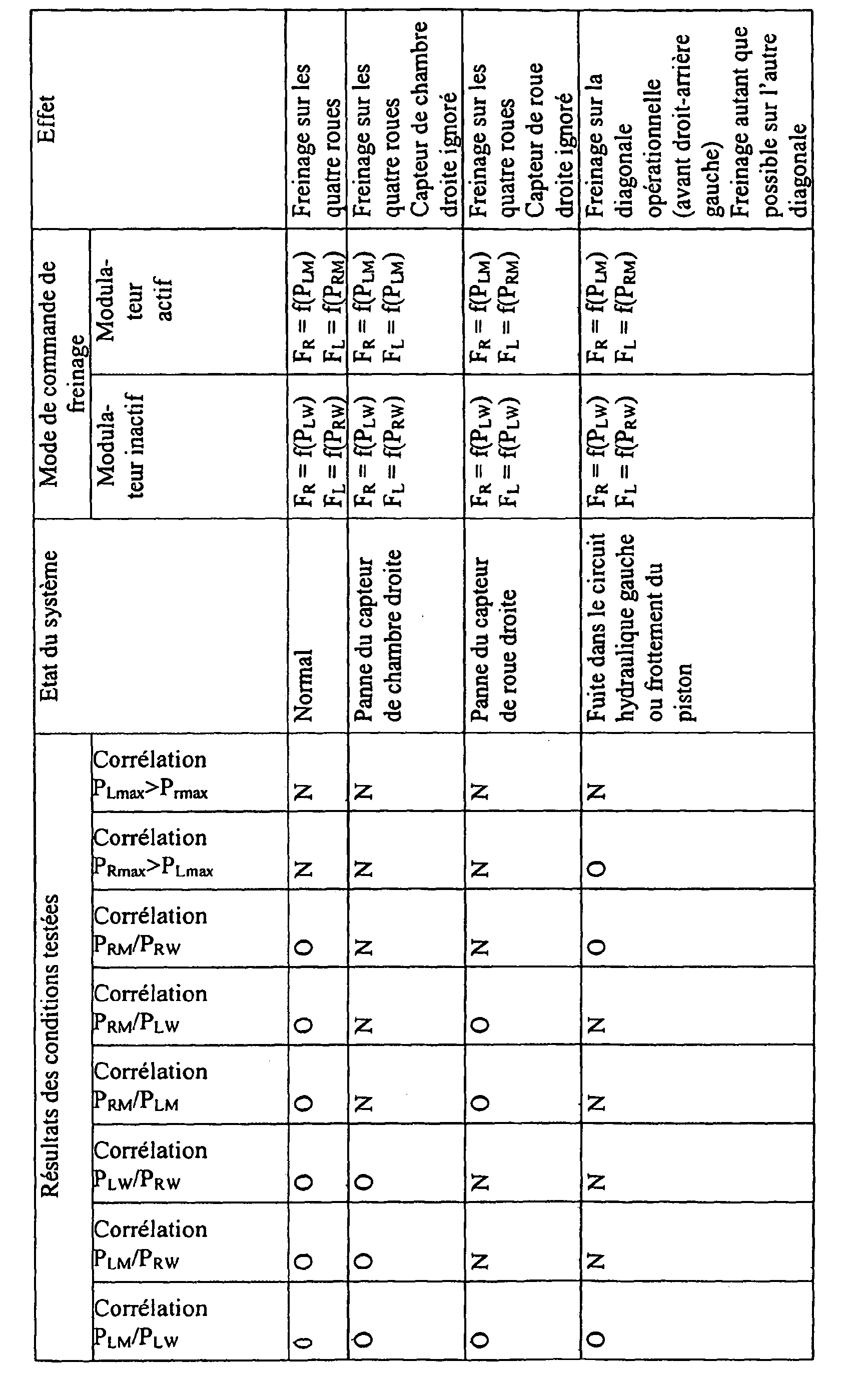

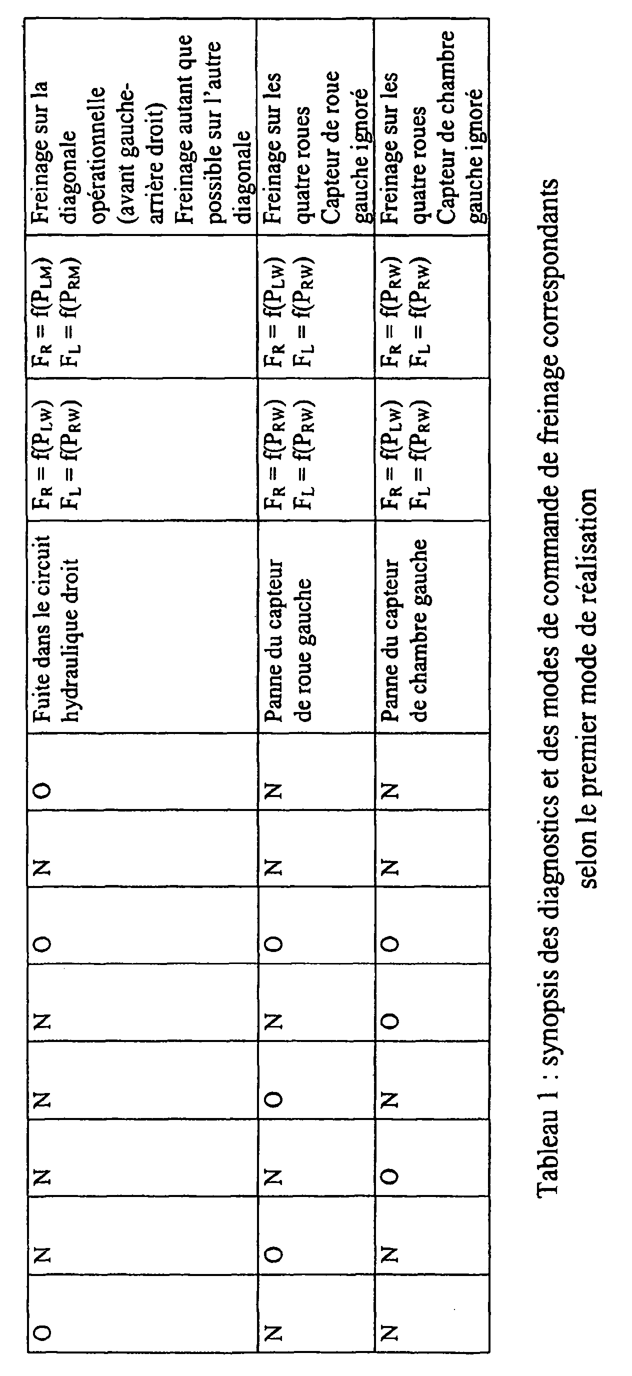

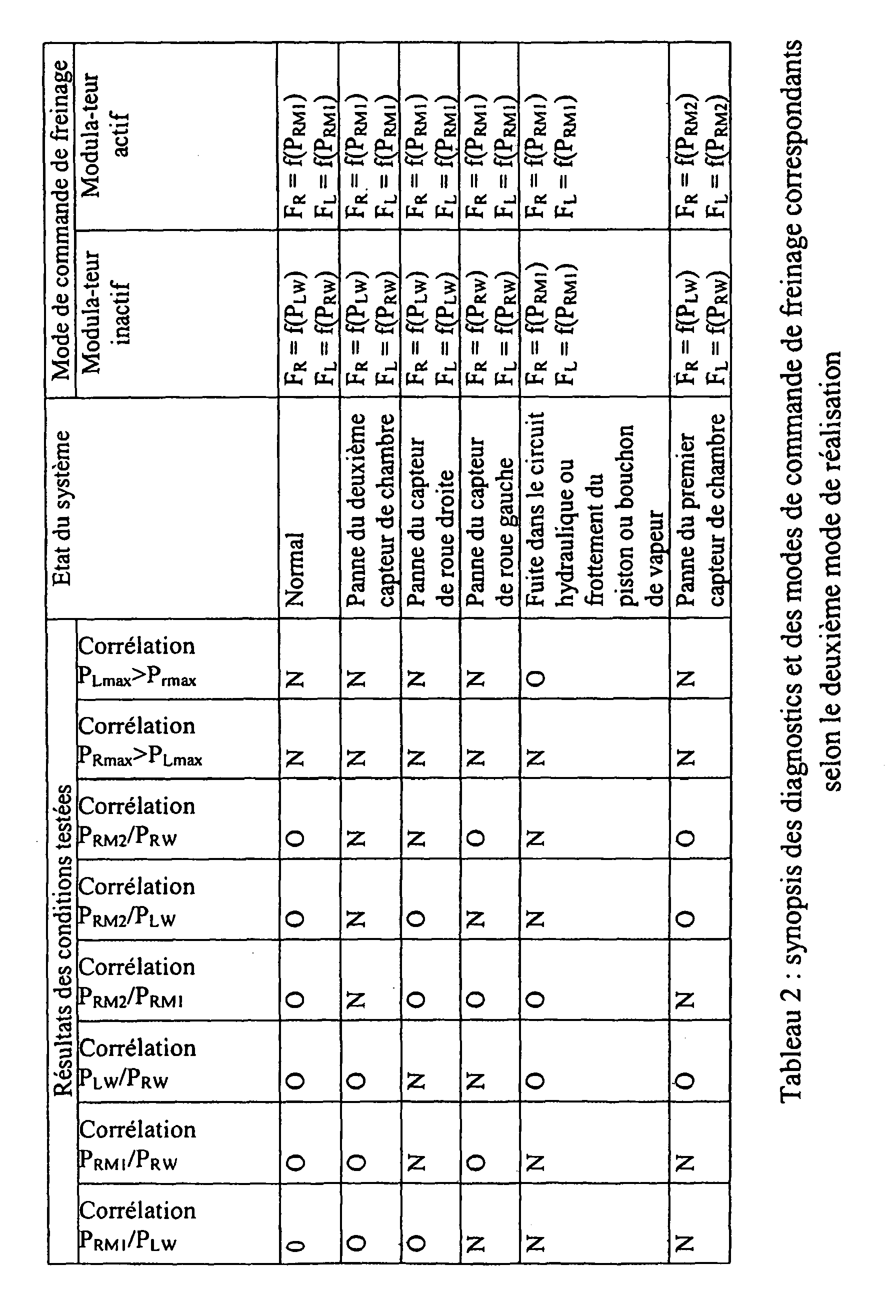

## Revendications

1. Procédé de contrôle d'un système de freinage hybride (6) d'un véhicule (1), ledit système de freinage comportant un maître-cylindre (11) ayant une première et une deuxième chambres (13, 12, 113, 112), un premier et un deuxième freins hydrauliques (7, 8, 107, 108) aptes à appliquer respectivement une force de freinage sur une première et une deuxième roues avant (2, 3, 102, 103) dudit véhicule, un premier circuit hydraulique (17, 117) apte à mettre en communication une desdites première et deuxième chambres (13, 113) avec ledit premier frein hydraulique (7, 107), un deuxième circuit hydraulique (18, 118) apte à mettre en communication une desdites première et deuxième chambres (12, 112) avec ledit deuxième frein hydraulique (8, 108), ledit système de freinage comportant un premier et un deuxième freins électriques (10, 9) aptes à appliquer respectivement une force de freinage sur une première et une deuxième roues arrière (5, 4) dudit véhicule, ladite première roue arrière (5) étant diagonalement opposée à ladite première roue avant (2, 102), ladite deuxième roue arrière (4) étant diagonalement opposée à ladite deuxième roue avant (3, 103), ledit système de freinage comportant un capteur de pression (21, 121A) apte à mesurer une première pression de chambre (P_{RM}, P_{RM1}) au niveau d'au moins une desdites première et deuxième chambres (13, 113) du maître cylindre, un capteur de pression (20, 121B) apte à mesurer une deuxième pression de chambre (P_{RM}, P_{RM2}) au niveau d'au moins une desdites première et deuxième chambres du maître cylindre, un capteur de pression (22, 122) apte à mesurer une première pression de roue (P_{RW}) au niveau du premier frein hydraulique et un capteur de pression (23, 123) apte à mesurer une deuxième pression de roue (P_{LW}) au niveau du deuxième frein hydraulique, **caractérisé par** les étapes consistant à :
a) Effectuer (100) une mesure desdites première pression de chambre deuxième pression de chambre, première pression de roue et deuxième pression de roue,
b) évaluer (101ᵢ) plusieurs conditions de corrélation entre à chaque fois deux desdites pressions mesurées afin de déterminer un état dudit système de freinage, et
c) sélectionner (106) une première et une deuxième pressions de commande de freinage arrière parmi lesdites pressions mesurées à l'étape a) en fonction des valeurs des conditions de corrélation évaluées à l'étape b), lesdites première et deuxième pressions de commande étant destinées à servir au calcul de la force de freinage (F_{R}, F_{L}) devant être appliquée par lesdits premier et deuxième freins électriques respectivement.

2. Procédé selon la revendications 1, **caractérisé en ce qu'**il comprend une étape e) consistant à tester (105) si un modulateur (19) disposé dans lesdits premier et deuxième circuits hydrauliques (17, 18, 117, 118) est actif, lesdites première et deuxième pressions de commande de freinage arrière étant sélectionnées à l'étape c) en fonction du test de l'étape e).

3. Procédé selon la revendication 2, **caractérisé en ce que** si ledit modulateur (19) est actif, lesdites première et deuxième pressions de commande de freinage arrière sélectionnées à l'étape c) sont choisies parmi lesdites pressions de chambre (P_{RM}, P_{LM}, P_{RM1}, P_{RM2}), sinon lesdites première et deuxième pressions de commande sélectionnées à l'étape c) sont choisies parmi lesdites pressions de roue (P_{RW}, P_{LW}).

4. Procédé selon la revendication 1 à 3, **caractérisé en ce que**, à l'étape b), l'évaluation d'une condition de corrélation consiste à calculer la différence entre lesdites deux pressions mesurées et à comparer ladite différence avec une plage de tolérance prédéfinie (sᵢ).

5. Procédé selon la revendication 4, **caractérisé en ce que** ladite plage de tolérance prédéfinie (sᵢ) est fonction de la vitesse d'application de l'effort de freinage.

6. Procédé selon l'une quelconque des revendications 1 à 5, **caractérisé en ce que** l'étape b) comporte les sous-étapes consistant à :
- évaluer (101₆) une condition de corrélation (c₆) entre ladite première pression de roue (P_{RW}) et ladite première pression de chambre (P_{RM}, P_{RM1}),
- évaluer (101₄ ou 101₅) une condition de corrélation (c₄ ou c₅) entre ladite première pression de chambre (P_{RM}, P_{RM1}) et l'une desdites deuxièmes pressions (P_{LM} ou P_{LW}, P_{LW} ou P_{RM2}),
- et, si aucune des deux conditions de corrélation n'est vérifiée, déterminer un état dudit système de freinage comprenant une panne d'un capteur de première pression de chambre.

7. Procédé selon la revendication 6, **caractérisé en ce que** ladite première pression de commande de freinage arrière sélectionnée à l'étape c) est la première pression de roue (P_{RW}) ou la deuxième pression de chambre (P_{LM}, P_{RM1}).

8. Procédé selon l'une quelconque des revendications 1 à 7, **caractérisé en ce que** l'étape b) comporte les sous-étapes consistant à :
- évaluer (101₆) une condition de corrélation (c₆) entre ladite première pression de roue (P_{RW}) et ladite première pression de chambre (P_{RM}, P_{RM1}),
- évaluer (101₂ ou 101₃) une condition de corrélation (c₂ ou c₃) entre ladite première pression de roue (P_{RW}) et l'une desdites deuxièmes pression (P_{LM} ou P_{LW}, P_{RM2} ou P_{LW}),
- et, si aucune des deux conditions de corrélation n'est vérifiée, déterminer un état dudit système de freinage comprenant une panne d'un capteur de première pression de roue.

9. Procédé selon la revendication 8, **caractérisé en ce que** ladite première pression de commande de freinage arrière sélectionnée à l'étape c) est la première pression de chambre (P_{RM}, P_{RM1}) ou la deuxième pression de roue (P_{LW}).

10. Procédé selon l'une quelconque des revendications 1 à 9, **caractérisé en ce que** ledit premier circuit hydraulique (117) est apte à mettre en communication ladite deuxième chambre (112) avec ledit premier frein hydraulique (107) et que ledit deuxième circuit hydraulique (118) est apte à mettre en communication ladite deuxième chambre (112) avec ledit deuxième frein hydraulique (108), lesdites première et deuxième pressions de chambre (P_{RM1,} P_{RM2}) étant mesurées par lesdits capteurs de pression (121A, 121B) au niveau de ladite première chambre (113) du maître cylindre, l'étape b) comportant les sous-étapes consistant à:
- évaluer une première condition de corrélation entre ladite première pression de chambre (P_{RM1}) et ladite deuxième pression de chambre (P_{RM2}),
- évaluer une deuxième condition de corrélation entre ladite première pression de roue (P_{RW}) et ladite deuxième pression de roue (P_{LW}),
- évaluer une troisième condition de corrélation entre l'une desdites pressions de chambre (P_{RM1} ou P_{RM2}) et l'une desdites pressions de roue (P_{RW} ou P_{LW}),
- et, si la première condition est vérifiée, et que la deuxième condition est vérifiée, et que la troisième condition n'est pas vérifiée, déterminer un état du système dans lequel au moins un desdits circuits hydrauliques présente un risque de fuite.

11. Procédé selon l'une quelconque des revendications 1 à 9, **caractérisé en ce que** ledit premier circuit hydraulique (17) est apte à mettre en communication ladite première chambre (13) avec ledit premier frein hydraulique (7) et que ledit deuxième circuit hydraulique (18) est apte à mettre en communication ladite deuxième chambre (12) avec ledit deuxième frein hydraulique (8), lesdites première et deuxième pressions de chambre (P_{RM}, P_{LM}) étant mesurées par lesdits capteurs de pression au niveau des première et deuxième chambres du maître cylindre respectivement, l'étape b) comportant les sous-étapes consistant à:
- évaluer (101₆) une première condition de corrélation (c₆) entre ladite première pression de roue (P_{RW}) et ladite première pression de chambre (P_{RM}),
- évaluer (101₂ ou 101₃) une deuxième condition de corrélation (c₂ ou c₃) entre ladite première pression de roue (P_{RW}) et l'une desdites deuxièmes pression (P_{LM} ou P_{LW}),
- évaluer (101₄ ou 101₅) une troisième condition de corrélation (c₄ ou c₅) entre ladite première pression de chambre (P_{RM}) et l'une desdites deuxièmes pression (P_{LM} ou P_{LW}),
- et, si la première condition est vérifiée, et que la deuxième condition n'est pas vérifiée, et que la troisième condition n'est pas vérifiée, déterminer un état du système dans lequel au moins un desdits circuits hydrauliques présente un risque de fuite.

12. Procédé selon la revendication 11, **caractérisé en ce qu'**il comporte une étape d) consistant à :
- sélectionner la plus haute première pression mesurée parmi lesdites premières pressions,
- sélectionner la plus haute deuxième pression mesurée parmi lesdites deuxièmes pressions, et
- comparer entre elles ladite plus haute première pression (P_{Rmax}) et ladite plus haute deuxième pression (P_{Lmax}),
le résultat de la comparaison effectuée à l'étape d) étant utilisé pour détecter dans lequel desdits circuits hydrauliques se trouve le risque de fuite.

13. Procédé selon la revendication 12, **caractérisé en ce que**, si ladite plus haute première pression (P_{Rmax}) est strictement inférieure à ladite plus haute deuxième pression (P_{Lmax}), l'état dudit système de freinage déterminé à l'étape b) comprend un risque de fuite dans ledit premier circuit hydraulique (17) et si ladite plus haute première pression est strictement supérieure à ladite plus haute deuxième pression, l'état dudit système de freinage déterminé à l'étape b) comprend un risque de fuite dans ledit deuxième circuit hydraulique (18).

14. Procédé selon l'une quelconque des revendications 1 à 13 **caractérisé en ce que** l'étape b) comporte les sous-étapes consistant à :
- évaluer (101₄) une condition de corrélation (c₄) entre ladite première pression de chambre (P_{RM}, P_{RM1}) et ladite deuxième pression de chambre (P_{LM}, P_{RM2}),
- évaluer (101₁) une condition de corrélation (c₁) entre ladite deuxième pression de chambre (P_{LM}, P_{RM2}) et ladite deuxième pression de roue (P_{LW}),
- évaluer (101₆) une condition de corrélation (c₆) entre ladite première pression de chambre (P_{RM}, P_{RM1}) et ladite première pression de roue (P_{RW}), et, si les trois conditions de corrélation sont vérifiées, déterminer un état hydraulique normal du système de freinage.

15. Procédé selon l'une des revendications 1 à 14, **caractérisé en ce que**, dans un état hydraulique normal du système de freinage, ladite première pression de commande de freinage arrière sélectionnée à l'étape c) est l'une desdites première pression (P_{RM}, P_{RW}, P_{RM1}) et ladite deuxième pression de commande de freinage arrière sélectionnée à l'étape c) est l'une desdites deuxième pression (P_{LM}, P_{LW}).

16. Procédé selon l'une quelconque des revendication 1 à 15, **caractérisé en ce que** les étapes a) et b) sont effectuées de manière répétée dans le temps, lesdites conditions de corrélation évaluées à l'étape b) étant à chaque fois des conditions de corrélation entre deux pressions instantanées, et que, à l'étape c) lesdites pressions de commande de freinage arrière sont sélectionnées en fonction de valeurs statistiques moyennes desdites conditions de corrélation.

17. Procédé selon la revendication 16, **caractérisé en ce qu'**on définit un compteur (jᵢ) associé à chacune desdites conditions de corrélation (cᵢ), l'étape b) comportant les sous-étapes consistant à incrémenter (102ᵢ,_{B}) ledit compteur à chaque fois que ladite condition de corrélation entre pression instantanées est vérifiée et décrémenter (102ᵢ,_{A}) ledit compteur à chaque fois que ladite condition de corrélation entre pression instantanée n'est pas vérifiée, ladite valeur statistique moyenne d'une condition de corrélation étant obtenue en comparant ledit compteur à un seuil prédéterminé (Nᵢ).

18. Système de freinage hybride (6) d'un véhicule (1), ledit système de freinage comportant un maître-cylindre (11) ayant une première et une deuxième chambres (13, 12, 113, 112), un premier et un deuxième freins hydrauliques (7, 8, 107, 108) aptes à appliquer respectivement une force de freinage sur une première et une deuxième roues avant (2, 3, 102, 103) dudit véhicule, un premier circuit hydraulique (17, 117) apte à mettre en communication une desdites première et deuxième chambres avec ledit premier frein hydraulique, un deuxième circuit hydraulique (18, 118) apte à mettre en communication une desdites première et deuxième chambres avec ledit deuxième frein hydraulique, ledit système de freinage comportant un premier et un deuxième freins électriques (10, 9) aptes à appliquer respectivement une force de freinage sur une première et une deuxième roues arrière (5, 4) dudit véhicule, ladite première roue arrière étant diagonalement opposée à ladite première roue avant, ladite deuxième roue arrière étant diagonalement opposée à ladite deuxième roue avant, ledit système de freinage comportant un capteur de pression (21, 121A) apte à mesurer une première pression de chambre (P_{RM}, P_{RM1}) au niveau d'au moins une desdites première et deuxième chambres (13, 113) du maître cylindre, un capteur de pression (20, 121B) apte à mesurer une deuxième pression de chambre (P_{RM}, P_{RM2}) au niveau d'au moins une desdites première et deuxième chambres du maître cylindre, un capteur de pression (22, 122) apte à mesurer une première pression de roue (P_{RW}) au niveau du premier frein hydraulique et un capteur de pression (23, 123) apte à mesurer une deuxième pression de roue (P_{LW}) au niveau du deuxième frein hydraulique, **caractérisé en ce que** ledit système de freinage comporte des moyens logiques de corrélation pour évaluer plusieurs conditions de corrélation (cᵢ) entre à chaque fois deux desdites pressions mesurées afin de déterminer un état dudit système de freinage, et des moyens logiques de sélection pour sélectionner une première et une deuxième pressions de commande de freinage arrière parmi lesdites pressions mesurées en fonction des valeurs des conditions de corrélation évaluées, et des moyens de commande de freinage aptes à commander lesdits premier et deuxième freins électriques respectivement en fonction desdites première et deuxième pressions de commande sélectionnées.

## Claims

1. Method for controlling a hybrid braking system (6) of a vehicle (1), the said braking system comprising a master cylinder (11) having a first and a second chamber (13, 12, 113, 112), a first and a second hydraulic brake (7, 8, 107, 108) which are able each respectively to apply a braking force to a first and second front wheel (2, 3, 102, 103) of the said vehicle, a first hydraulic circuit (17, 117) able to place one of the said first and second chambers (13, 113) in communication with the said first hydraulic brake (7, 107), a second hydraulic circuit (18, 118) able to place one of the said first and second chambers (12, 112) in communication with the said second hydraulic brake (8, 108), the said braking system comprising a first and a second electric brake (10, 9) which are able respectively each to apply a braking force to a first and a second rear wheel (5, 4) of the said vehicle, the said first rear wheel (5) being diagonally opposite the said first front wheel (2, 102), the said second rear wheel (4) being diagonally opposite the said second front wheel (3, 103), the said braking system comprising a pressure sensor (21, 121A) able to measure a first chamber pressure (P_{RM}, P_{RM1}) in at least one of the said first and second chambers (13, 113) of the master cylinder, a pressure sensor (20, 121B) able to measure a second chamber pressure (P_{RM}, P_{RM2}) in at least one of the said first and second chambers of the master cylinder, a pressure sensor (22, 122) able to measure a first wheel pressure (P_{RW}) at the first hydraulic brake and a pressure sensor (23, 123) able to measure a second wheel pressure (P_{LW}) at the second hydraulic brake, **characterized by** the steps that consist in:
a) measuring (100) the said first chamber pressure, the said second chamber pressure, the said first wheel pressure and the said second wheel pressure,
b) evaluating (101ᵢ) several conditions of correlation between, in each instance, two of the said measured pressures in order to determine the status of the said braking system, and
c) selecting (106) a first rear braking control pressure and a second rear braking control pressure from the said pressures measured in step a) according to values of the correlation conditions evaluated in step b), the said first and second control pressures being intended to be used for calculating the braking force (F_{R}, F_{L}) that will need to be applied by the said first and second electric brakes respectively.

2. Method according to Claim 1, **characterized in that** it involves a step e) that consists in testing (105) whether a modulator (19) positioned in the said first and second hydraulic circuits (17, 18, 117, 118) is active, the said first and second rear braking control pressures being selected in step c) on the basis of the test in step e).

3. Method according to Claim 2, **characterized in that** if the said modulator (19) is active then the said first and second rear braking control pressures selected in step c) are chosen from the said chamber pressures (P_{RM}, P_{LM}, P_{RM1,} P_{RM2}), otherwise the said first and second control pressures selected in step c) are chosen from the said wheel pressures (P_{RW}, P_{LW}).

4. Method according to Claims 1 to 3, **characterized in that**, in step b), evaluating a correlation condition consists in calculating the difference between the said two pressures measured and in comparing the said difference against a predefined tolerance band (sᵢ).

5. Method according to Claim 4, **characterized in that** the said predefined tolerance band (sᵢ) is a function of the rate at which the braking force is applied.

6. Method according to any one of Claims 1 to 5, **characterized in that** step b) involves the substeps that consist in:
- evaluating (101₆) a correlation condition (c₆) between the said first wheel pressure (P_{RW}) and the said first chamber pressure (P_{RM}, P_{RM1}),
- evaluating (101₄ or 101₅) a correlation condition (c₄ or c₅) between the said first chamber pressure (P_{RM}, P_{RM1}) and one of the said second pressures (P_{LM} or P_{LW}, P_{LW} or P_{RM2}),
- and, if neither of the two correlation conditions is satisfied, determining a braking system status that involves a breakdown of a first chamber pressure sensor.

7. Method according to Claim 6, **characterized in that** the said first rear braking control pressure selected in step c) is the first wheel pressure (P_{RW}) or the second chamber pressure (P_{LM}, P_{RM1}).

8. Method according to any one of Claims 1 to 7, **characterized in that** step b) involves the substeps that consist in:
- evaluating (101₆) a correlation condition (c₆) between the said first wheel pressure (P_{RW}) and the said first chamber pressure (P_{RM}, P_{RM1}),
- evaluating (101₂ or 101₃) a correlation condition (c₂ or c₃) between the said first wheel pressure (P_{RW}) and one of the said second pressures (P_{LM} or P_{LW}, P_{RM2} or P_{LW}),
- and, if neither of the two correlation conditions is satisfied, determining a braking system status that involves a breakdown of a first wheel pressure sensor.

9. Method according to Claim 8, **characterized in that** the said first rear braking control pressure selected in step c) is the first chamber pressure (P_{RM}, P_{RM1}) or the second wheel pressure (P_{LW}).

10. Method according to any one of Claims 1 to 9, **characterized in that** the said first hydraulic circuit (117) is able to place the said second chamber (112) in communication with the said first hydraulic brake (107) and **in that** the said second hydraulic circuit (118) is able to place the said second chamber (112) in communication with the said second hydraulic brake (108), the said first and second chamber pressures (P_{RM1}, P_{RM2}) being measured by the said pressure sensors (121A, 121B) at the said first chamber (113) of the master cylinder, step b) involving the substeps that consist in:
- evaluating a first correlation condition between the said first chamber pressure (P_{RM1}) and the said second chamber pressure (P_{RM2}),
- evaluating a second correlation condition between the said first wheel pressure (P_{RW}) and the said second wheel pressure (P_{LW}),
- evaluating a third correlation condition between one of the said chamber pressures (P_{RM1}, or PRM₂) and one of the said wheel pressures (P_{RW} or P_{LW}),
- and, if the first condition is satisfied, and the second condition is satisfied, and the third condition is not satisfied, determining a system status in which at least one of the said hydraulic circuits exhibits a risk of leakage.

11. Method according to any one of Claims 1 to 9, **characterized in that** the said first hydraulic circuit (17) is able to place the said first chamber (13) in communication with the said first hydraulic brake (7), and **in that** the second hydraulic circuit (18) is able to place the said second chamber (12) in communication with the said second hydraulic brake (8), the said first and second chamber pressures (P_{RM}, P_{LM}) being measured by the said pressure sensors at the first and second chambers of the master cylinder respectively, step b) involving the substeps that consist in:
- evaluating (101₆) a first correlation condition (c₆) between the said first wheel pressure (P_{RW}) and the said first chamber pressure (P_{RM}),
- evaluating (101₂ or 101₃) a second correlation condition (c₂ or c₃) between the said first wheel pressure (P_{RW}) and one of the said second pressures (P_{LM} or P_{LW}),
- evaluating (101₄ or 101₅) a third correlation condition (c₄ or c₅) between the said first chamber pressure (P_{RM}) and one of the said second pressures (P_{LM} or P_{LW}),
- and, if the first condition is satisfied and the second condition is not satisfied and the third condition is not satisfied, determining a system status in which at least one of the said hydraulic circuits exhibits a risk of leakage.

12. Method according to Claim 11, **characterized in that** it involves a step d) that consists in:
- selecting from the said first pressures the highest first pressure measured,
- selecting from the said second pressures the highest second pressure measured, and
- comparing the said highest first pressure (P_{Rmax}) against the said highest second pressure (P_{Lmax}),
the result of the comparison performed in step d) being used to detect which of the said hydraulic circuits carries the risk of leakage.

13. Method according to Claim 12, **characterized in that**, if the said highest first pressure (P_{Rmax}) is significantly lower than the said highest second pressure (P_{Lmax}), then the status of the said braking system as determined in step b) involves a risk of leakage in the said first hydraulic circuit (17), and if the said highest first pressure is significantly higher than the said highest second pressure then the status of the said braking system as determined in step b) involves a risk of leakage in the said second hydraulic circuit (18).

14. Method according to any one of Claims 1 to 13, **characterized in that** step b) involves the substeps that consist in:
- evaluating (101₄) a correlation condition (c₄) between the said first chamber pressure (P_{RM}, P_{RM1}) and the said second chamber pressure (P_{LM}, P_{RM2}),
- evaluating (101₂) a correlation condition (c₁) between the said second chamber pressure (P_{LM}, P_{RM2}) and the said second wheel pressure (P_{LW}),
- evaluating (101₆) a correlation condition (c₆) between the said first chamber pressure (P_{RM}, P_{RM1}) and the said first wheel pressure (P_{RW}),
and, if the three correlation conditions are satisfied, determining that the hydraulic status of the braking system is normal.

15. Method according to one of Claims 1 to 14, **characterized in that**, when the hydraulic status of the braking system is normal, the said first rear braking control pressure selected in step c) is one of the said first pressures (P_{RM}, P_{RW}, P_{RM1}) and the said second rear braking control pressure selected in step c) is one of the said second pressures (P_{LM}, P_{LW}).

16. Method according to any one of Claims 1 to 15, **characterized in that** steps a) and b) are performed repeatedly over time, the said correlation conditions evaluated in step b) being, in each instance, correlation conditions between two instantaneous pressures, and **in that**, in step c), the said rear braking control pressures are selected on the basis of mean statistical values of the said correlation conditions.

17. Method according to Claim 16, **characterized in that** a counter (jᵢ) associated with each of the said correlation conditions (cᵢ) is defined, step b) involving the substeps that consist in incrementing (102ᵢ,_{B}) the said counter each time the said correlation condition between instantaneous pressures is satisfied and in decrementing (102_{i,A}) the said counter each time the said correlation condition between instantaneous pressures is not satisfied, the said mean statistical value of a correlation condition being obtained by comparing the said counter against a predetermined threshold value (Nᵢ).

18. Hybrid braking system (6) for a vehicle (1), the said braking system comprising a master cylinder (11) having a first and a second chamber (13, 12, 113, 112), a first and a second hydraulic brake (7, 8, 107, 108) which are able each respectively to apply a braking force to a first and a second front wheel (2, 3, 102, 103) of the said vehicle, a first hydraulic circuit (17, 117) able to place one of the said first and second chambers (13, 113) in communication with the said first hydraulic brake, a second hydraulic circuit (18, 118) able to place one of the said first and second chambers in communication with the said second hydraulic brake, the said braking system comprising a first and a second electric brake (10, 9) which are able respectively each to apply a braking force to a first and a second rear wheel (5, 4) of the said vehicle, the said first rear wheel being diagonally opposite the said first front wheel, the said second rear wheel being diagonally opposite the said second front wheel, the said braking system comprising a pressure sensor (21, 121A) able to measure a first chamber pressure (P_{RM}, P_{RM1}) in at least one of the said first and second chambers (13, 113) of the master cylinder, a pressure sensor (20, 121B) able to measure a second chamber pressure (P_{RM}, P_{RM2}) in at least one of the said first and second chambers of the master cylinder, a pressure sensor (22, 122) able to measure a first wheel pressure (P_{RW}) at the first hydraulic brake and a pressure sensor (23, 123) able to measure a second wheel pressure (P_{LW}) at the second hydraulic brake, **characterized in that** the said braking system comprises logic correlation means for evaluating several correlation conditions (cᵢ) between, in each instance, two of the said measured pressures in order to determine a status of the said braking system, and logic selection means for selecting a first rear braking control pressure and a second rear braking control pressure from the said measured pressures according to the values of the correlation conditions evaluated, and braking control means able to control the said first and second electric brakes respectively on the basis of the said first and second control pressures selected.

## Patentansprüche

1. Verfahren zur Steuerung eines Hybridbremssystems (6) eines Fahrzeugs (1), wobei das Bremssystem einen Hauptzylinder (11) mit einer ersten und einer zweiten Kammer (13, 12, 113, 112), eine erste und eine zweite Hydraulikbremse (7, 8, 107, 108) jeweils zur Ausübung einer Bremskraft auf ein erstes und ein zweites Vorderrad (2, 3, 102, 103) des Fahrzeugs, einen ersten Hydraulikkreislauf (17, 117) zur Herstellung einer kommunizierenden Verbindung zwischen einer der ersten und zweiten Kammern (13, 113) mit der ersten Hydraulikbremse (7, 107), einen zweiten Hydraulikkreislauf (18, 118) zur Herstellung einer kommunizierenden Verbindung zwischen einer der ersten und zweiten Kammern (12, 112) mit der zweiten Hydraulikbremse (8, 108) aufweist, wobei das Bremssystem eine erste und eine zweite elektrische Bremse (10, 9) jeweils zur Ausübung einer Bremskraft auf ein erstes und ein zweites Hinterrad (5, 4) des Fahrzeugs aufweist, wobei das erste Hinterrad (5) dem ersten Vorderrad (2, 102) diagonal gegenüber liegt und das zweite Hinterrad (4) dem zweiten Vorderrad (3, 103) diagonal gegenüber liegt, wobei das Bremssystem einen Drucksensor (21, 121A) zur Messung eines ersten Kammerdrucks (P_{RM}, P_{RM1}) in wenigsten einer der ersten und zweiten Kammern (13, 113) des Hauptzylinders, einen Drucksensor (20, 121B) zur Messung eines zweiten Kammerdrucks (P_{RM}, P_{RM2}) in wenigstens einer der ersten und zweiten Kammern des Hauptzylinders, einen Drucksensor (22, 122) zur Messung eines ersten Raddrucks (P_{RW}) an der ersten Hydraulikbremse und einen Drucksensor (23, 123) zur Messung eines zweiten Raddrucks (P_{LW}) an der zweiten Hydraulikbremse aufweist, **gekennzeichnet durch** die Schritte bestehend aus:
a) Durchführen (100) einer Messung des ersten Kammerdrucks, des zweiten Kammerdrucks, des ersten Raddrucks und des zweiten Raddrucks,
b) Ermitteln (101ᵢ) mehrerer Korrelationsbedingungen zwischen jeweils zwei der gemessenen Drücke, um einen Zustand des Bremssystems zu bestimmen, und
c) Auswählen (106) eines ersten und eines zweiten hinteren Bremssteuerdrucks aus den im Schritt a) gemessenen Drücken in Abhängigkeit von den Werten der Korrelationsbedingungen, die im Schritt b) ermittelt wurden, wobei die ersten und zweiten Steuerdrücke vorgesehen sind, der Berechnung der Bremskraft (F_{R}, F_{L}) zu dienen, die jeweils von der ersten und zweiten elektrischen Bremse ausgeübt werden muss.

2. Verfahren gemäß Anspruch 1, **dadurch gekennzeichnet, dass** es einen Schritt e) umfasst, der darin besteht, zu überprüfen (105), ob ein in den ersten und zweiten Hydraulikkreisläufen (17, 18; 117, 118) angeordneter Modulator (19) aktiv ist, wobei die ersten und zweiten hinteren Bremssteuerdrücke in Abhängigkeit von der Überprüfung des Schrittes e) ausgewählt werden.

3. Verfahren gemäß Anspruch 2, **dadurch gekennzeichnet, dass** wenn der Modulator (19) aktiv ist, die im Schritt c) ausgewählten ersten und zweiten hinteren Bremssteuerdrücke aus den Kammerdrücken (P_{RM}, P_{LM,} P_{RM1,} P_{RM2}) ausgewählt werden, während anderenfalls die in dem Schritt c) ausgewählten ersten und zweiten Steuerdrücke aus den Raddrücken (P_{RW}, P_{LW}) ausgewählt werden.

4. Verfahren gemäß einem der Ansprüche 1 bis 3, **dadurch gekennzeichnet, dass** im Schritt b) die Ermittlung einer Korrelationsbedingung darin besteht, die Differenz zwischen den beiden gemessenen Drücken zu berechnen und diese Differenz mit einem vorgegebenen Toleranzbereich (sᵢ) zu vergleichen.

5. Verfahren gemäß Anspruch 4, **dadurch gekennzeichnet, dass** der vorgegebenen Toleranzbereich (sᵢ) abhängig von der Geschwindigkeit der Ausübung der Bremskraft ist.

6. Verfahren gemäß einem der Ansprüche 1 bis 5, **dadurch gekennzeichnet, dass** der Schritt b) die Unterschritte aufweist, bestehend aus:
- Ermitteln (101₆) einer Korrelationsbedingung (c₆) zwischen dem ersten Raddruck (P_{RW}) und dem ersten Kammerdruck (P_{RM}, P_{RM1}),
- Ermitteln (101₄ oder 101₅) einer Korrelationsbedingung (c₄ oder c₅) zwischen dem ersten Kammerdruck (P_{RM}, P_{RM1}) und einem der zweiten Drücke (P_{LM}, oder P_{LW}, P_{LW}, oder P_{RM2}),
- und, wenn keine der beiden Korrelationsbedingungen verifiziert wird, Bestimmen eines Zustands des Bremssystems, der einen Defekt eines Sensors für den ersten Kammerdruck umfasst.

7. Verfahren gemäß Anspruch 6, **dadurch gekennzeichnet, dass** der im Schritt c) ausgewählte erste hintere Bremssteuerdruck der erste Raddruck (P_{RW}) oder der zweite Kammerdruck (P_{LM}, P_{RM1}) ist.

8. Verfahren gemäß einem der Ansprüche 1 bis 7, **dadurch gekennzeichnet, dass** der Schritt b) die Unterschritte aufweist, bestehend aus:
- Ermitteln (101₆) einer Korrelationsbedingung (c₆) zwischen dem ersten Raddruck (P_{RW}) und dem zweiten Kammerdruck (P_{RM}, P_{RM1})
- Ermitteln (101₂ oder 101₃) einer Korrelationsbedingung (c₂ oder c₃) zwischen dem ersten Raddruck (P_{RW}) und einem der beiden Drücke (P_{LM}, oder P_{LW}, P_{RM2} oder P_{LW})
- und, wenn keine der beiden Korrelationsbedingungen verifiziert wird, Bestimmen eines Zustands des Bremssystems, der einen Defekt eines Sensors für den ersten Raddruck umfasst.

9. Verfahren gemäß Anspruch 8, **dadurch gekennzeichnet, dass** der im Schritt c) ausgewählte erste hintere Bremssteuerdruck der erste Kammerdruck (P_{RM}, P_{RM1}) oder der zweite Raddruck (P_{LW}) ist.

10. Verfahren gemäß einem der Ansprüche 1 bis 9, **dadurch gekennzeichnet, dass** der erste Hydraulikkreislauf (117) eine kommunizierende Verbindung zwischen der zweiten Kammer (112) mit der ersten Hydraulikbremse (107) herstellen kann, und dass der zweite Hydraulikkreislauf (118) eine kommunizierende Verbindung der zweiten Kammer (112) mit der zweiten Hydraulikbremse (108) herstellen kann, wobei die ersten und zweiten Kammerdrücke (P_{RM1}, P_{RM2}) von den Drucksensoren (121A, 121B) in der zweiten Kammer (113) des Hauptzylinders gemessen werden, wobei der Schritt b) die Unterschritte aufweist, bestehend aus:
- Ermitteln einer ersten Korrelationsbedingung zwischen dem ersten Kammerdruck (P_{RM1}) und dem zweiten Kammerdruck (P_{RM2}),
- Ermitteln einer zweiten Korrelationsbedingung zwischen dem ersten Raddruck (P_{RW}) und dem zweiten Raddruck (P_{LW}),
- Ermitteln einer dritten Korrelationsbedingung zwischen einem der Kammerdrücke (P_{RM1}, oder P_{RM2}) und einem der Raddrücke (P_{RW}, oder P_{LW}),
- und, wenn die erste Bedingung verifiziert wird und die zweite Bedingung verifiziert wird und die dritte Bedingung nicht verifiziert wird, Bestimmen eines Zustands des Systems, bei dem in wenigstens einem der Hydraulikkreisläufe die Gefahr eines Lecks besteht.

11. Verfahren gemäß einem der Ansprüche 1 bis 9, **dadurch gekennzeichnet, dass** der erste Hydraulikkreislauf (17) eine kommunizierende Verbindung der ersten Kammer (13) mit der ersten Hydraulikbremse (7) herstellen kann, und dass der zweite Hydraulikkreislauf (18) eine kommunizierende Verbindung der zweiten Kammer (12) mit der zweiten Hydraulikbremse (8) herstellen kann, wobei die ersten und zweiten Kammerdrücke (P_{RM}, P_{LM}) von den Drucksensoren jeweils in den ersten und zweiten Kammern des Hauptzylinders gemessen werden, wobei der Schritt b) die Unterschritte aufweist, bestehend aus:
- Ermitteln (101₆) einer ersten Korrelationsbedingung (c₆) zwischen dem ersten Raddruck (P_{RW}) und dem ersten Kammerdruck (P_{RM}),
- Ermitteln (101₂ oder 101₃) einer zweiten Korrelationsbedingung (c₂ oder c₃) zwischen dem ersten Raddruck (P_{RW}) und einem der zweiten Drücke (P_{LM} oder P_{LW}),
- Ermitteln (101₄ oder 101₅) einer dritten Korrelationsbedingung (c₄ oder c₅) zwischen dem ersten Kammerdruck (P_{RM}) und einem der zweiten Drücke (P_{LM}, oder P_{LW}),
- und, wenn die erste Bedingung verifiziert ist und die zweite Bedingung nicht verifiziert ist und die dritte Bedingung nicht verifiziert ist, Bestimmen eines Zustands des Systems, bei dem in wenigstens einem der Hydraulikkreisläufe die Gefahr eines Lecks besteht.

12. Verfahren gemäß Anspruch 11, **dadurch gekennzeichnet, dass** es einen Schritt d) umfasst, bestehend aus:
- Auswählen des höchsten gemessenen ersten Drucks aus den ersten Drücken,
- Auswählen des höchsten gemessenen zweiten Drucks aus den zweiten Drücken, und
- Vergleichen des höchsten ersten Drucks (P_{Rmax}) mit dem höchsten zweiten Druck (P_{Lmax}),
wobei das Ergebnis des im Schritt d) durchgeführten Vergleichs verwendet wird, um festzustellen, in welchem der Hydraulikkreisläufe die Gefahr eines Lecks besteht.

13. Verfahren gemäß Anspruch 12, **dadurch gekennzeichnet, dass** wenn der höchste erste Druck (P_{Rmax}) streng kleiner als der höchste zweite Druck (P_{Lmax}) ist, der in dem Schritt b) bestimmte Zustand des Bremssystems die Gefahr eines Lecks in dem ersten Hydraulikkreislauf (17) umfasst, und, wenn der höchste erste Druck streng größer als der höchste zweite Druck ist, der im Schritt b) bestimmte Zustand des Bremssystems die Gefahr eines Lecks in dem zweiten Hydraulikkreislauf (18) umfasst.

14. Verfahren gemäß einem der Ansprüche 1 bis 13, **dadurch gekennzeichnet, dass** der Schritt b) die Unterschritte aufweist, bestehend aus:
- Ermitteln (101₄) einer Korrelationsbedingung (04) zwischen dem ersten Kammerdruck (P_{RM}, P_{RM1}) und dem zweiten Kammerdruck (P_{LM}, P_{RM2}),
- Ermitteln (101₁) einer Korrelationsbedingung (c₁) zwischen dem zweiten Kammerdruck (P_{LM}, P_{RM2}) und dem zweiten Raddruck (P_{LW}),
- Ermitteln (101₆) einer Korrelationsbedingung (c₆) zwischen dem ersten Kammerdruck (P_{RM}, P_{RM1}) und dem ersten Raddruck (P_{RW}),
- und, wenn die drei Korrelationsbedingungen verifiziert sind, Bestimmen eines normalen Hydraulikzustandes des Bremssystems.

15. Verfahren gemäß einem der Ansprüche 1 bis 14, **dadurch gekennzeichnet, dass** in einem normalen Hydraulikzustand des Bremssystems der in dem Schritt c) ausgewählte erste hintere Bremssteuerdruck einer der ersten Drücke (P_{RM}, P_{RW}, P_{RM1}) ist und der im Schritt c) ausgewählte zweite hintere Bremssteuerdruck einer der zweiten Drücke (P_{LM}, P_{LW}) ist.

16. Verfahren gemäß einem der Ansprüche 1 bis 15, **dadurch gekennzeichnet, dass** die Schritte a) und b) sich zeitlich wiederholt durchgeführt werden, wobei die im Schritt b) ermittelten Korrelationsbedingungen jeweils Korrelationsbedingungen zwischen zwei Momentandrücken sind, und dass im Schritt c) die hinteren Bremssteuerdrücke in Abhängigkeit von den statistischen Mittelwerten der Korrelationsbedingungen ausgewählt werden.

17. Verfahren gemäß Anspruch 16, **dadurch gekennzeichnet, dass** man einen Zähler (jᵢ) definiert, der jeder der Korrelationsbedingungen (cᵢ) zugeordnet ist, wobei der Schritt b) die Unterschritte aufweist, bestehend aus Inkrementieren (102_{i,B}) des Zählers jedes Mal, wenn die Korrelationsbedingung zwischen den Momentandrücken verifiziert wird, und Dekrementieren (102_{i,A}) des Zählers jedes Mal, wenn die Korrelationsbedingung zwischen den Momentandrücken nicht verifiziert wird, wobei der statistische Mittelwert einer Korrelationsbedingung **dadurch** erhalten wird, dass man den Zähler mit einem vorgegebenen Grenzwert (Nᵢ) vergleicht.

18. Hybridbremssystem (6) eines Fahrzeugs (1), wobei das Bremssystem einen Hauptzylinder (11) mit einer ersten und einer zweiten Kammer (13, 12, 113, 112), eine erste und eine zweite Hydraulikbremse (7, 8, 107, 108) jeweils zur Ausübung einer Bremskraft auf ein erstes und ein zweites Vorderrad (2, 3, 102, 103) des Fahrzeugs, einen ersten Hydraulikkreislauf (17, 117) zur Herstellung einer kommunizierenden Verbindung zwischen einer der ersten und zweiten Kammern mit der ersten Hydraulikbremse, einen zweiten Hydraulikkreislauf (18, 118) zur Herstellung einer kommunizierenden Verbindung zwischen einer der ersten und zweiten Kammern mit der zweiten Hydraulikbremse aufweist, wobei das Bremssystem eine erste und eine zweite elektrische Bremse (10, 9) jeweils zur Ausübung einer Bremskraft auf ein erstes und ein zweites Hinterrad (5, 4) des Fahrzeugs aufweist, wobei das erste Hinterrad dem ersten Vorderrad diagonal gegenüber liegt und das zweite Hinterrad dem zweiten Vorderrad diagonal gegenüber liegt, wobei das Bremssystem einen Drucksensor (21, 121A) zur Messung eines ersten Kammerdrucks (P_{RM}, P_{RM1}) in wenigsten einer der ersten und zweiten Kammern (13, 113) des Hauptzylinders, einen Drucksensor (20, 121B) zur Messung eines zweiten Kammerdrucks (P_{RM}, P_{RM2}) in wenigstens einer der ersten und zweiten Kammern des Hauptzylinders, einen Drucksensor (22, 122) zur Messung eines ersten Raddrucks (P_{RW}) an der ersten Hydraulikbremse und einen Drucksensor (23, 123) zur Messung eines zweiten Raddrucks (P_{LW}) an der zweiten Hydraulikbremse aufweist, **dadurch gekennzeichnet, dass** das Bremssystem Korrelations-Logikmittel zur Ermittlung mehrere Korrelationsbedingungen (cᵢ) zwischen jeweils zwei der gemessenen Drücke, um einen Zustand des Bremssystems zu bestimmen, und Auswahl-Logikmittel zum Auswählen eines ersten und eines zweiten hinteren Bremssteuerdrucks unter den gemessenen Drücken in Abhängigkeit von den Werten der ermittelten Korrelationsbedingungen, und Bremssteuermittel zur Steuerung der ersten und zweiten elektrischen Bremsen jeweils abhängig von den ausgewählten ersten und zweiten Steuerdrücken aufweist.
